# DEMANDE DE BREVET EUROPEEN

(11) **EP 2 444 640 A1**
(43) Date de publication de la demande: **25.04.2012**
(21) Numéro de dépôt: 11306204.6
(22) Date de dépôt: 22.09.2011
(51) Int. Cl.: F02D 41/02, F02D 41/40

(54) **Procédé de commande de la régéneration d'un filtre à particules**

(30) Priorité: 21.10.2010 FR 1058603
(71) Demandeur: Renault S.A.S., 92100 Boulogne-Billancourt (FR)
(72) Inventeur: Le Morvan, Pierre-Yves, 92370 Chaville (FR); Descamps, Xavier, 91820 Boutigny s/Essonne (FR); Ramseyer, Aurélien, 92100 Boulogne-Billancourt (FR); Dufourniaud, François, 92160 Antony (FR)

(57) **Abrégé**

Procédé de commande de la régénération d'un filtre à particules (9) par production d'exotherme contrôlé dans la ligne d'échappement (7) grâce à l'injection de carburant destiné au chauffage préliminaire d'un catalyseur d'oxydation (8) situé en amont du filtre à particules (9) dans la ligne d'échappement, caractérisé en ce qu'à partir d'un seuil prédéterminé de température dans le filtre à particules (9), les quantités de carburant injectées sont régulées en fonction de la température, et du taux d'oxygène dans les gaz d'échappement en d'entrée du filtre (9).

## Description

La présente invention se rapporte au domaine de la dépollution des moteurs diesel, et plus particulièrement à la régénération des filtres à particules.

Elle concerne les stratégies d'enrichissement en carburant des gaz d'échappement dans le cylindre, qui sont appliquées à la régénération des filtres à particules.

Plus précisément, cette invention a pour objet un procédé de commande de la régénération d'un filtre à particules par production d'exotherme contrôlé dans la ligne d'échappement, grâce à l'injection de carburant destiné au chauffage préliminaire du catalyseur d'oxydation situé en amont du filtre à particules.

Contrairement aux catalyseurs d'oxydation, qui appliquent un traitement continu aux gaz d'échappement, les filtres à particules, ou FAP, fonctionnent de manière discontinue ou alternative. En fonctionnement normal, ils piègent les polluants, qu'ils traitent lors de phases de régénération, pendant lesquelles les particules stockées sont brûlées. Pour être régénérés, les FAP nécessitent des modes de combustion spécifiques, requérant des niveaux de thermique et/ou de richesse déterminés pour brûler les particules.

Les opérations de régénération des filtres à particules nécessitent des niveaux de thermique élevés dans la ligne d'échappement, entre 600 et 700°C. Ces températures, qui sont très éloignées de celles produites par le moteur en fonctionnement normal, sont atteintes en appliquant des stratégies particulières dans le contrôle moteur, et en introduisant des agents réducteurs supplémentaires dans les cylindres du moteur, ou dans la ligne d'échappement.

L'injection supplémentaire de carburant dans les cylindres se traduit par une augmentation de la consommation de carburant et de la quantité de carburant diluée dans l'huile du moteur, qui altère les propriétés de celle-ci. Il faut alors réduire les intervalles de vidange. Cette contrainte pèse sur toute stratégie visant à générer de la chaleur dans les gaz d'échappement par injections supplémentaires de carburant dans les cylindres du moteur.

La température minimum pour la combustion des suies est d'environ 550°C. Avec la quantité de carburant injectée, la concentration en oxygène des gaz d'échappement est le deuxième paramètre dont le contrôle est nécessaire pour maîtriser la régénération.

Il faut en effet éviter l'emballement de la régénération, c'est-à-dire une combustion incontrôlée des suies, dont la conséquence est la destruction du FAP (fissuration, casse), qui peut entraîner l'incendie du véhicule. Il est donc nécessaire de contrôler la température et le taux d'oxygène des gaz d'échappement pendant les régénérations.

Ce risque est particulièrement présent dans les zones à faibles débit de gaz échappement avec des masses de suie élevées, où le contrôle des échanges thermiques ne permet pas à lui seul de contrôler la combustion en raison de l'inertie thermique du FAP par rapport à la vitesse des gaz. Ce phénomène est particulièrement sensible lors des retours au ralenti. En effet, la quantité de carburant injecté baisse brusquement, et le débit de gaz traversant le filtre à particules est très concentré en oxygène: associé à une température du FAP qui reste élevée, l'arrivée subite du débit de gaz échappement à forte teneur en O₂ fait alors courir le risque d'un emballement de régénération.

L'emballement de la régénération peut être évité en limitant simplement la masse maximale de suies dans le FAP, donc en augmentant la fréquence des régénérations. Mais cette solution a pour inconvénient d'augmenter la dilution de carburant dans l'huile, et la consommation du moteur.

La présente invention vise à maîtriser les régénérations du FAP en conservant une température suffisamment élevée dans celui-ci, tout en évitant les risques d'emballement de la combustion.

Dans ce but, elle propose de réguler les quantités de carburant injectées dans le moteur en vue de sa régénération, soit classiquement en fonction de la température, soit en fonction du taux d'oxygène dans les gaz d'échappement en d'entrée du filtre, dans des zones de protection.

De préférence, le taux d'oxygène est limité sous un seuil de concentration déterminé dans des zones protection du filtre, correspondant à des faibles débits des gaz d'échappement.

Le taux d'oxygène en entrée du FAP, devient le facteur limitant dans les phases critiques de la régénération, telles que les zones à faible régime/charge et/ou de ralenti. Avec tous les types de filtre utilisés, la température interne filtre peut ainsi être maintenue en dessous de son seuil de fissuration. Ce contrôle est particulièrement avantageux, car le FAP peut ainsi accepter des masses de suies plus élevées sans risque d'emballement, ce qui permet d'espacer les régénérations.

La présente invention sera mieux comprise à la lecture de la description suivante d'un mode de réalisation non limitatif de celle-ci, en se reportant aux dessins annexés, sur lesquels la figure unique présente le schéma fonctionnel d'une architecture moteur permettant la mise en oeuvre de l'invention.

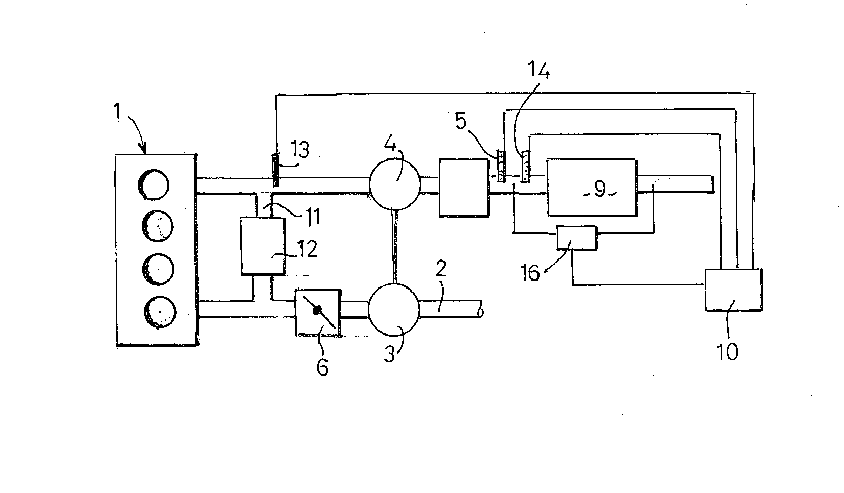

Sur la figure 1, on a fait apparaître le bloc moteur 1 d'un moteur à quatre cylindres. La conduite d'admission 2 rencontre le compresseur 3 du turbo compresseur 3, 4, avant le volet d'admission 6. Côté échappement, la conduite d'échappement 7 rencontre successivement la turbine 4 du turbocompresseur 3, un catalyseur d'oxydation 8, et un filtre à particules ou FAP 9. Une boucle de recirculation des gaz d'échappement (EGR) 11, dotée d'un refroidisseur 12 relie la conduite d'échappement 7 à la conduite d'admission 2. Enfin, différents capteurs sont reliés au calculateur de contrôle moteur (ECU) 10. On trouve un capteur de température avant turbine Tₐᵥₜ 13, une sonde à oxygène 5 en entrée du FAP, un capteur de température en entrée du FAP T_{eFAP} 14 et un capteur de pression différentielle aux bornes du FAP P_{diff} 16. Cette architecture est cependant donnée uniquement à titre d'exemple, et est loin d'être la seule configuration à laquelle peut s'appliquer le procédé de commande proposé.

Lorsque que le moteur se trouve sur des zones de faible régime/charge, ou de ralenti, la quantité de carburant injecté est faible, et le débit de gaz traversant le filtre à particules pendant ces phases est très concentré en oxygène. Comme indiqué précédemment, cette situation favorise une combustion incontrôlée des particules, si bien que les risques d'emballement de la combustion sont élevés.

Sur la base de calculs on peut cependant définir une zone dite de protection du FAP, qui réunit les points de fonctionnement moteur les plus critiques, face aux risques d'emballement de la régénération. Pour chaque moteur, ces points sont liés à la masse de suie maximale souhaitée dans le filtre, par les deux propriétés suivantes: un débit de gaz échappement relativement faible, et une concentration relativement élevée de l'oxygène dans les gaz échappement.

L'emballement de la régénération a d'autant plus de chances de se produire, que la quantité de suies dans le filtre est importante, que la chaleur produite dans la ligne est importante, et que la teneur en oxygène dans les gaz d'échappement est élevée. Dans ces zones à faible débit de gaz échappement, la thermique seule ne permet pas de contrôler l'emballement, car l'inertie thermique du FAP par rapport à la vitesse de gaz est trop importante. En revanche, on peut contrôler le taux d'oxygène dans les gaz d'échappement, 10 à 15 fois plus rapidement que la température d'entrée du FAP T_{eFAP} 14.

L'invention propose donc de piloter la régénération en limitant la teneur en O₂ des gaz échappement dans cette zone de protection, au lieu de faire reposer ce contrôle sur la régulation de la température d'entrée du FAP. Ce type de pilotage est mis en oeuvre de préférence dans les zones de protection, à faibles débits de gaz échappement, par exemple inférieurs à 60 kg/h sur un moteur turbocompressé de 1.5 litre de cylindrée. On parvient ainsi à « étouffer » rapidement la combustion des suies, et à repousser les limites de l'emballement du filtre.

Pour maîtriser le taux d'oxygène dans les zones de protection, on peut agir sur le volet d'admission d'air 6 dans le moteur pour réduire le débit de gaz, tout en continuant à injecter du carburant. Le carburant injecté permet alors de réguler le taux d'oxygène mesuré en entrée du filtre, sans générer de couple. Cette méthode permet de limiter la quantité de carburant nécessaire à la réduction du taux d'oxygène, donc de limiter la surconsommation et la dilution liée aux injections dédiées de carburant. Le contrôle du taux d'oxygène en entrée du FAP peut être réalisé par une modification des réglages moteur dans la zone de protection du FAP, ou par une régulation de la quantité de carburant injectée en post-injection, basée sur une information mesurée par la sonde à oxygène.

Le carburant dédié à la régénération peut être introduit sous forme d'injections tardives (post-injection) dans les chambres de combustion du moteur.

Sans sortir du cadre de l'invention, ces post-injections peuvent être remplacées en tout ou partie par des injections dans la ligne d'échappement, à l'aide d'un injecteur implanté directement dans celle-ci, en amont du catalyseur. L'utilisation de l'injecteur additionnel à l'échappement dans les zones de protection permet en effet d'injecter du carburant en supprimant tout risque de produire du couple moteur et en limitant la dilution de l'huile par le carburant.

Le déclenchement et le contrôle de la régénération du FAP peuvent s'effectuer de la façon suivante. La quantité de suies stockées dans le filtre à particules est déterminée au moyen du capteur de pression différentielle aux bornes du FAP, P_{diff} 16, ou d'un modèle de calcul de chargement en suies:
- lorsque cette valeur dépasse un seuil prédéterminé, le calculateur du moteur 10 déclenche la régénération du FAP,
- le catalyseur 8 est alors chauffé afin de permettre une bonne réaction avec les réducteurs qui génèreront l'exotherme; afin de faire monter la température de la ligne d'échappement, le calculateur peut déclencher des injections retardées, ou « post injections » proches de l'injection principale dans les cylindres du moteur, ou des injections directes de carburant à l'échappement.

Durant cette phase préliminaire de montée en température de la ligne d'échappement, les quantités d'hydrocarbures et de monoxyde d'azote HC/CO introduites sont cependant limitées à celles que le catalyseur 8 est capable de traiter. Une fois la température souhaitée atteinte, la phase préliminaire est arrêtée.

La phase de production de l'exotherme nécessaire à la régénération effective du FAP est alors déclenchée. Les quantités de carburant injectées en vue de la régénération du filtre sont régulées en fonction de la température, ou du taux d'oxygène dans les gaz d'échappement en entrée de celui-ci.

La régulation des quantités de carburant est donc réalisée en contrôlant la température en entrée du FAP (T_{eFAP}) et la quantité d'oxygène présente dans les gaz d'échappement avant le FAP, donnée par la sonde à oxygène 5. Un modèle de régulation thermique et un modèle de régulation de l'oxygène, intégrés dans le calculateur déterminent la quantité de carburant injectée et éventuellement le moment de l'injection dans chaque cylindre en fonction des zones (protection FAP ou non).

Dans les zones protection du filtre, le taux d'oxygène est alors limité sous un seuil de concentration déterminé. Ce seuil, déterminé au moment de la mise au point du moteur, peut avoisiner les 5%. Dans la zone de protection, les injections de carburant dédiées sont alors poursuivies, de manière à réguler le taux d'oxygène en entrée du filtre, sans générer de couple moteur.

Enfin, quand la quantité de suies estimée redescend en dessous d'inférieure à un seuil donné, le calculateur peut commander l'arrêt de la régénération, de sorte que le moteur repasse dans un mode de combustion classique, avec une richesse faible.

Le procédé de contrôle proposé par l'invention présente de nombreux intérêts. En premier lieu il s'applique potentiellement à toutes les architectures FAP existantes. Ensuite, il permet de réduire les marges de température prises habituellement pour prévenir l'emballement du FAP. On peut donc régénérer moins souvent, et attendre des conditions de régénération plus favorables. Il en résulte une réduction de la consommation de carburant et de la dilution de carburant dans l'huile moteur, dues aux régénérations du FAP.

## Revendications

1. Procédé de commande de la régénération d'un filtre à particules (9) par production d'exotherme contrôlé dans la ligne d'échappement (7) grâce à l'injection de carburant destiné au chauffage préliminaire d'un catalyseur d'oxydation (8) situé en amont du filtre à particules (9) dans la ligne d'échappement, **caractérisé en ce qu'**à partir d'un seuil prédéterminé de température dans le filtre à particules (9), les quantités de carburant injectées sont régulées en fonction de la température, et du taux d'oxygène dans les gaz d'échappement en d'entrée du filtre (9).

2. Procédé de commande selon la revendication 1, **caractérisé en ce que** le taux d'oxygène est limité sous un seuil de concentration déterminé, dans des zones protection du filtre (9) contre les risques d'emballement de la régénération correspondant à des faibles débits des gaz d'échappement.

3. Procédé de commande selon la revendication 2, **caractérisé en ce que** les zones de protection du filtre (9) sont des zones de faible régime et de faible charge, et/ou de ralenti.

4. Procédé de commande selon la revendication 2, **caractérisé en ce que** dans les zones de protection, les injections dédiées de carburant sont réalisées de manière à réguler le taux d'oxygène en entrée du filtre (9), sans générer de couple moteur.

5. Procédé de contrôle selon l'une des revendications précédentes, **caractérisé en ce que** le seuil du taux d'oxygène est déterminé lors de la mise au point du moteur.

6. Procédé de commande selon l'une des revendications précédentes, **caractérisé en ce que**, dans les zones de protection, la température est régulée sur une cible déterminée par calibration du contrôle moteur.

7. Procédé de commande selon l'une des revendications précédentes, **caractérisé en ce que** les injections de carburant dédiées à la régénération du filtre (9) sont des injections tardives dans les chambres de combustion du moteur.

8. Procédé de commande selon l'une des revendications 1 à 6, **caractérisé en ce que** les injections dédiées à la régénération du filtre (9) sont des injections directes dans la ligne d'échappement (7)

9. Procédé de commande selon la revendication 7, **caractérisé en ce que** lors de l'entrée dans la zone de protection, le taux d'oxygène est réduit jusqu'à environ 3,5% par commande du volet d'admission et par injections tardives.

10. Procédé de commande selon la revendication 8, **caractérisé en ce qu'**il consiste à piloter par calibration le volet admission (6) du moteur pour réduire le débit de gaz à l'entrée dans les zones de protection, avant d'injecter du carburant qui ne génère pas de couple mais qui permet de réguler le taux d'oxygène mesuré en entrée du filtre (9).
